Europäisches Patentamt

European Patent Office

Office européen des brevets

(19)

(11) Publication number: **0 188 355**

**A2**

(12)

# EUROPEAN PATENT APPLICATION

(21) Application number: **86300185.5**

(22) Date of filing: **14.01.86**

(51) Int. Cl.⁴: **A 01 G 7/00**

(30) Priority: **14.01.85 GB 8500814**

(43) Date of publication of application:
**23.07.86 Bulletin 86/30**

(84) Designated Contracting States:
**BE DE FR GB IT NL**

(71) Applicant: **NATIONAL RESEARCH DEVELOPMENT CORPORATION**
**101 Newington Causeway**
**London SE1 6BU(GB)**

(72) Inventor: **Dodd, Peter Brian**
**34 Orchard Drive Wye**
**Ashford Kent TN25 5AU(GB)**

(74) Representative: **Percy, Richard Keith**
**Patent Department National Research Development Corporation 101 Newington Causeway**
**London SE1 6BU(GB)**

(54) Method of growing strawberry plants.

(57) It has been a problem to extend the cropping season for strawberries into the spring and autumn. The waiting bed method is one solution to the problem. The invention provides a simpler and more reliable method of growing strawberry plants ready to be cold-stored or planted out for cultivation to fruiting, or to raise runners.

The method of the invention comprises the following steps:

(1) growing leaved plantlets having root initials or a small root system to develop their roots, the root initials and roots developed therefrom being maintained at a temperature at least equal to the ambient temperature of the top of the plantlet;

(2) treating the developing plantlets in a manner effective (a) to suppress apical growth and to promote the formation of a plurality of crowns per plantlet; or (b) to stimulate production of runners; and

(3) growing the plantlets further for a time sufficient to produce at least 3 crowns per plant or until at least the first runners are visible, respectively.

EP 0 188 355 A2

0188355

127744

## METHOD OF GROWING STRAWBERRY PLANTS

### Background of the invention

#### 1. Field of the invention

This invention relates to a method of growing strawberry plants ready for direct planting out or for cold storage, and further to a method of producing strawberry fruits from such plants.

#### 2. Description of the prior art

The main crop season for strawberries in the UK is the months of June or July. It would be advantageous to UK strawberry growers to extend the UK season in order to compete with importers of the fruit.

Currently most strawberry plants used by growers in the UK are raised from runners by specialist plant raisers. Most plants supplied are from certified stock. Runners are available fresh from October to December and in cold-stored condition from January to July.

It has been known for many years that cold-stored runners, planted in spring under conditions encouraging rapid establishment, will produce a small crop in late summer to early autumn. Generally, the amount of fruit produced has not made harvesting worthwhile and advice has been to remove emerging flowers and so conserve the plant's energy for maiden cropping the next year. If the cold-stored runners are planted in late July onwards the plants will not become established well, because they need one month longer than do fresh runners to produce a plant of the same stage of growth. The ordinary cold-storage process has therefore not been very useful in extending the cropping season.

The newer, "waiting bed" method has extended the cropping season. It is described by R.F. Clements in "The Grower", September 20, 1984, pages 14 to 15 and ib id., October, 11, 1984, pages 16 and 17. In the waiting bed method, the steps are as follows. (Arbitrary years are referred to for clarity, to distinguish between the months of one year and another).

1. Mother plants are planted in February to mid-March 1983 to raise runners. In August the runner plants are cut off from the mother plant.

Runner plants are alternatively obtained from cold-storage of those produced in 1982 or produced in the glasshouse by a special technique of rooting tips in mist from mid-June to August 1983.

2. The runner plants are transferred to the "waiting bed", in July 1983 if they have been cold-stored, otherwise in August 1983. The waiting bed is well irrigated, to encourage growth. After 3-4 months, each plant will have several crowns.

3. The crowned plants from the waiting bed are cold-stored for a period of at least 5 weeks (until mid-December 1983 for an early spring 1984 crop under glass). Waiting bed plants for a late summer 1984 crop are stored until mid-May 1984. Those for an early winter crop under glass are stored until mid-August 1984.

4. The cold-stored waiting bed plants are planted out and take about 3 months to fruit. In this way, fruit is produced from March to November.

The major problems with the waiting bed method are:-

(a) Two lifting and planting operations are involved.

(b) Plants are not uniform (samples from plant raisers consisted of plants with from 1-9 crowns).

(c) Frequent irrigation is necessary at planting to avoid large plant losses.

(d) Extended cold storage results in the poorer plants dying and the fruit quality of the survivors is reduced.

(e) The varieties used so far in the development of the method are not top quality commercial varieties.

(f) Plants cost approximately 12.5p each compared with 3.5p for normal runners and 5.5p for cold-stored runners.

Experiments have been conducted with plant growth regulators. They have been reviewed recently by J.H. Reid, Crop. Res. (Hort. Res.) 23, pages 113 to 120 (1983), who concluded that strawberry plants responded inconsistently to growth regulators.

Micropropagation methods have been tried, but with inconsistent results.

## Summary of the invention

It has now been found that most or all of the above problems can be avoided by a new process, characteristics of which comprise the substitution of a plant preconditioning step for the waiting bed, the preconditioning step comprising supplying bottom heat to the plantlet, either suppressing apical growth to encourage crown formation, or stimulating runner formation, and thereafter further growing the plants until multi-crowns or multi-runners are produced. By this means a continuous supply of plants is provided which can be used at once for fruit cultivation or for raising runners, or cold-stored, in which case the plants survive cold storage better than do waiting bed ones.

According to an important aspect of the invention, therefore, there is provided a method of growing strawberry plants, characterised by the following steps:-

(1)   growing leaved plantlets having root initials or a small root system to develop their roots, the root initials and roots developed therefrom being maintained at a temperature at least equal to the ambient temperature of the top of the plantlet;

(2)   treating the developing plantlets in a manner effective (a) to suppress apical growth and to promote the formation of a plurality of crowns per plantlet;  or (b) to stimulate production of runners and

(3)   growing the plantlets further for a time sufficient to produce at least 3 crowns per plant, or until at least the first runners are visible, respectively.

The starting plantlets for step (1), will normally be the runners from mother plants grown specifically to produce runners but they can also be plantlets having a few leaves, say 5-10 small leaves, produced by tissue culture.

The invention further includes a method of producing strawberry fruits characterised by planting crowned plants grown by the method defined above, directly or after cold-storage into a fruit cultivation bed, cultivating the plant to fruiting and harvesting the fruits.

Description of the preferred embodiments

The precise method by which the starting plantlets for step (1) are produced is not of the essence of the above-defined invention. Preferably they are runner plantlets, i.e. runners cut from a mother plant when they have 2 or 3 leaves. The runner-producing mother plant is preferably certified stock. Commercial production will ordinarily require that some measures be taken to increase the production of runners from the young mother plants. It has been found possible to do this by applying a plant growth regulator to the plant via its growing root system, i.e. in a substantially non-foliar manner, or predominantly to the roots of the plant. Gibberellins have been found very suitable when applied in an appropriate concentration. Gibberellic acid ($GA_3$) and derivatives or precursors of $GA_3$ having a runner-stimulating action are preferably used. It has been found desirable to use a solution of concentration 50 to 150 ppm, preferably about 100 ppm, and to allow the plant to soak up the gibberellin from this solution to a total amount of about 50 ml per plant on average. Too great an availability of gibberellin, e.g. a dip in 100 ppm $GA_3$ or more for 24 hours, will result in "leggy" plants with elongated aerial parts, which are undesirable. Where the $GA_3$ is introduced continuously into the nutrient solution its proportion is desirably 10 to 30 ppm, preferably about 20 ppm. Equivalent proportions for non-continuous introduction can be determined by those skilled in the art. This method is per se useful in any context in which early production of runners is required for stawberry growing, whether in conjunction with the above-defined invented method or another.

It is preferred to grow the runner-producing plants indoors, at first in water, with little or no nutrient added, and then in a nutrient solution. The gradual "weaning" of the plants onto high nutrient-containing solutions helps to prevent damage to the plant.

Conveniently the growing of runners can be performed as three steps of:-

(a)    growing the plants only in water,

(b)    removing them from the water and soaking their roots in the plant growth regulator, and

(c)    then growing the plants further under NFT (nutrient film technique) conditions.

The ambient temperature for growing of runners is preferably 15 to 25°C, most preferably 15 to 20°C. Below 15°C production or runners becomes very slow, while excessive temperatures will result in injury or death to the plants.

A photoperiod, as is known in runner production, is employed when the plants are grown indoors. Artificial light is normally provided for 13 to 16 hours, preferably about 16 hours.

A young mother plant can be made to produce a large number of runners, for example 60-80 runners on average per plant for cv. Hapil. The runners have growing points from which leaves emerge, and crowns from which fruit trusses develop. In conventional growing practice, each runner normally has only one such crown.

The runners are preferably cut off at the stage at which they have 2 or 3 leaves. If there is only 1 leaf the plantlet's chances of survival diminish. If they have 4 leaves they normally have a substantial root system, which is not immediately desirable, since the plantlets are then more difficult to place in blocks. Capability of being handled into blocks is important commercially. Also if they have an excessive number of leaves they will transpire excessively and wilt.

If the plantlets have been produced by tissue culture they will usually have a larger number of smaller leaves, say 5 to 10, and a root system which is visible but very small.

The plantlets are preferably planted in modules or units so that the mature plants ultimately resulting can be handled separately when being planted out for cropping. It is, of course, possible to plant them in mini-beds or any other way appropriate to ultimate usage. They can be planted in pots, although this is likely to be expensive. Blocks of rockwool are preferred since they are convenient to handle and highly permeable to liquids.

In step (1) the plantlets are grown to develop their roots. Generally stated, application of "bottom heat" is required for this purpose. The actual limitation is to ensure that the roots of the plantlet are not cooler than the top and this might be achievable in strong sunlight. However, as a practical matter, it is desirable to heat the bed artificially in some way, which, in turn implies growing the plantlets in a protected environment (indoors) and using heating elements near the base of the roots. Generally, a root temperature below $7^{\circ}C$ will give no growth while one above $25^{\circ}C$ will not be tolerated by most varieties. A temperature of about 15 to $20^{\circ}C$ is usually the most appropriate.

When the plants appear reasonably strong and healthy, e.g. their roots extend to a depth of 5 cm or more, they are treated to suppress apical growth. The preferred method of such treatment when formation of crowns is to be encouraged is to remove the apical bud, i.e. to tip-prune the main stem of the plant. While this has been practised in the horticulture of certain other plants, such as tomatoes or beans, it is believed to be a novel and radical departure from conventional practice in the commercial growing of strawberries.

An alternative method of suppressing apical growth and encouraging the formtion of crowns is to apply a plant growth regulator effective for that purpose on strawberries. If a systemic material, it should be applied to the plant via the growing root system or predominantly to the roots. That is to say, it should not be applied as a foliar spray or drench. Thus, the normal and preferred method of application will be by standing the plants in a solution of the growth regulator so as to permit uptake thereof via the root system.

Strawberries have been treated experimentally with chlormequat by foliar spraying, with variable results, but never in the context of a method such as described herein.

A 2-chloroethyltrimethylammonium salt, preferably the chloride ("chlormequat") is known for this purpose and is the preferred plant growth regulator. Examples of unsuitable plant growth regulators are daminozide and paclobutrazole.

Generally, the application of the plant growth regulator has an incremental effect on the number of crowns produced. If too many crowns are produced, the size of the fruit will suffer. The currently preferred number is 4 to 5, but under some circumstances as few as 2 or as many as 6 might be desired.

In step (3) the plants are grown further. The temperature conditions are preferably as in step (1). That is, the plantlets are ordinarily returned to "bottom heat". They are usually grown for 4-8 weeks, preferably about 6 weeks, under such conditions. The preferred objective is to produce at least 3 crowns per average plant for fruiting.

In principle, the plants could be left to grow still further, but in practice they would grow so much root that they would be difficult to plant out for cropping. Desirably they should not be grown beyond the stage of normal root length for re-planting in a fruit or runner cultivation bed, as appropriate.

In the preconditioning stage, as in the production of runners, the plantlets are preferably weaned onto a high nutrient level. Thus in steps (1) the plants are preferably grown initially in water with substantially no added nutrient and subsequently are grown in nutrient solution, in each case by a film technique in which water and subsequently nutrients are supplied to the bottom of the growth medium.

During the preconditioning stage it is useful to add pesticide(s) or fungicide(s), to the nutrient solution.

The plants produced from the preconditioning stage, which are of uniformly high quality, are included within the invention. The crowned plants can be planted out substantially immediately into a fruit cultivation bed and the plants cultivated to fruiting and harvested. They can be planted out, in a field, at an appropriate time of year, e.g. April to August in the UK. At other times, the "cropping bed" can be under protection e.g. polythene tunnels and in glasshouses. Plants have been grown by the method of the invention in soil, potting compost, peat modules in NFT and hydroponically. The invention includes the stawberry fruits thus produced.

The plants grown to stimulate runner production will normally be planted out in the open as soon as the beginnings of runners are formed. The plant is then grown to elongate the initially small runners, until the runners are ready for harvesting.

The preconditioned plants can be cold-stored before planting. The usual conditions of cold storage, typically at about $0^{o}C$, are applicable. The invention includes the cold-stored plants.

The invention is applicable to producing plants of many different varieties, including notably the excellent Hapil cultivar, Cambridge Favourite, Elsanta and "day neutral" varieties. It enables continuous cropping from March to December to be obtained, excellent yield and quality of fruit, flexibility both in the cropping programme and the variety of conditions under which plants can be grown for cropping, and use of the open ground can, if desired, be managed efficiently so that the plants are in the ground only for short periods, thus minimising weed control and more easily allowing rotation of crops in the ground.

The following Examples illustrate the invention. All solutions are, of course, aqueous.

### EXAMPLE 1

Production of runners

Two leaved unrooted runners from Ministry of Agriculture Certified Stock of the cultivar Hapil were placed in 50 mm rockwool cubes. The cubes were then placed in trays of water maintained to a depth of 2 cm and at a temperature of $20^{o}C$.

After approximately 14 days they had rooted through and were removed from the water, excess water wrung out and placed in 100 ppm gibberellic acid ($GA_3$) solution for 24 hours to encourage runner production. Alternatively 20 ppm $GA_3$ could be added to the nutrient solution described below.

**0188355**

After the hormone treatment they were placed in NFT troughs at a plant spacing of 25 cm. The nutrient solution used was one developed for lettuce, published in the Grower April 9, 1981 by J. Varley and S. Burrage. The solution was adjusted with 5% nitric acid to pH 6.0. The conductivity of the solution was initialy 15 CF units (1 CF unit = 1 micromho). The solution was replenished to maintain a conductivity of CF 15 for the first 7 days and thereafter CF 30.

The nutrient solution for lettuce referred to above contained, in g/200 litres: $KNO_3$ 16.59; $Mg(NO_3)_2 \cdot 6H_2O$ 6.54; $KH_2PO_4$ 4.14; $K_2SO_4$ 7.33; Fe.EDTA 0.080; "Librel BMX" chelate mix comprising chelated trace elements 1.18; and $Ca(NO_3)_2$ added at 3% wt/wt to compensate for the relatively small hardness of the local water.

The temperature was maintained at $15^{o}C$ at night and $20^{o}C$ during the day throughout the production of runners. Supplementary lighting was used to provide a 16 hour daylength at a minimum of 15 watts/$m^2$.

Plant preconditioning

Runners were removed from the mother plants at the two leaf stage and placed in 50 mm rockwool cubes. The cubes were then placed in trays of water maintained to a depth of 1 to 2 cm and at a temperature of $20^{o}C$. After approximately 14 days they were rooted through and the plants were stood in the above-described nutrient solution at CF15 for 7 days and thereafter at CF30.

After a total of 28 days, they were removed from the nutrient solution, excess solution wrung out and placed in 1500 ppm chlormequat for 24 hours to encourage crown formation and subsequently increase yield. Approximately 50 ml of solution (75 mg chlormequat) were taken up per cube.

The plants were then returned to the heated benches and nutrient solution at CF30 for an additional 4 to 6 weeks to grow further.

Supplementary lighting was used to provide an 8 hour daylength at a minimum of 15 watts/$m^2$.

- 10 -

The plants obtained after a total of 10 weeks of preconditioning were compact, healthy, plants having an average of 4.0 crowns per plant and 12.8 leaves.

Planting out

The preconditioned plants were then planted out for cropping in a range of situations. These included into the open field, in polythene tunnels and in a glasshouse, with or without heat.

The continuous supply of preconditioned plants by this invention allows sequential cropping of a single variety. Growing under protection is necessary to cropping in the UK from March until mid-June and from October until December. Some additional heat will usually be required at the extremes of the cropping period.

The following illustrative cropping schedule has been developed, based on a harvesting period of approximately 14 days for each planting.

Cropping programme for preconditioned plants of cv.Hapil

```
.JAN.FEB.MAR.APR.MAY. JUN. JUL.AUG.SEP.OCT.NOV.DEC.
xxxxxxxxxxHH                          Pxxxxxxx
xxxxxxxxxxxxHH                        Pxxxx
xxxxxxxxxxxxxxHH                      Px
PxxxxxxxxxxxxxxxxHH
  PxxxxxxxxxxxxxxxxHH
   PxxxxxxxxxxxxxxxHH
      Poooooooooooooo oHH
        Poooooooooooooo HH
         Poooooooooooo HH
          Pooooooooooo HH
           Pooooooooooo HH
             Poooooooooo HH
              Poooooooooooo HH
                Pxxxxxxxxx HH
                 Pxxxxxxxxx HH
                  Pxxxxxxxxx HH
                    Pxxxxxxxxxx HH
                     Pxxxxxxxxxxxx HH
                       Pxxxxxxxxxxxx HH
```

P = Planting,  H = Harvesting,  o = Outside  x = Protection
(e.g. polythene tunnel or glasshouse).  Each character represents
one week.

## EXAMPLE 2

This Example illustrates the embodiment in which apical
growth is suppressed by removing the apical bud.

Example 1 was repeated except that in the plant preconditioning stages the chlormequat treatment was omitted and instead
the apical bud was removed with forceps.

The plants obtained after a total of 10 weeks of preconditioning were healthy plants with 3.8 crowns per plant and 15.8
leaves.

## EXAMPLE 3

This Example illustrates the embodiment in which runner
production is stimulated in the preconditioning stage.

Example 1 was repeated with the following changes in the
plant preconditioning stage.

1.   The supplementary lighting was used to provide a 16 hour
     daylength for producing plants for runners.

2.   Instead of the chlormequat treatment the plants were placed
     in 50 ppm $GA_3$ for 24 hours to encourage runner formation.

The plants had an open, elongated structure having about
twice as many runners per plant as controls produced from mother
plants in the same way as described under "Production of runners"
in Example 1 but not subjected to preconditioning.  The runners
were also produced earlier than those of the control plants.

The plants were planted in a "runner bed" in October and
allowed to grow until November of the following year.  The runners
from these plants were harvested in the normal way.  They could
then be planted in the open field for fruit production.  (In the
actual circumstances set out above the planting and lifting were
done at abnormal times.  Normally, the runners would fruit the
following season.)

89B

**0188355**

## CLAIMS

1. A method of growing strawberry plants, characterised by the following steps:-

(1) growing leaved plantlets having root initials or a small root system to develop their roots, the root initials and roots developed therefrom being maintained at a temperature at least equal to the ambient temperature of the top of the plantlet;

(2) treating the developing plantlets in a manner effective (a) to suppress apical growth and to promote the formation of a plurality of crowns per plantlet; or (b) to stimulate production of runners; and

(3) growing the plantlets further for a time sufficient to produce at least 3 crowns per plant or until at least the first runners are visible, respectively.

2. A method according to Claim 1, characterised in that in step (1) the root temperature is from 7 to 25°C.

3. A method according to Claim 2, characterised in that the root temperature is from 15 to 20°C.

4. A method according to Claim 1, 2 or 3, characterised in that step (1) is carried out until the plants have roots which extend to a depth of at least 5 cm.

5. A method according to any preceding claim characterised in that in step (1) the plants are grown indoors, at first in water, without any nutrient, and then in a nutrient solution, in a manner effective to prevent damage to the plant by osmotic stress.

6. A method according to any preceding claim characterised in that in step (3) the roots are maintained at a temperature effective for their growth but at a temperature at least equal to the ambient temperature of the top of the plantlet.

7. A method according to Claim 6 characterised in that in step (3) the temperature is from 7 to 25°C.

8. A method according to any preceding claim characterised by the further step of cold-storing a plant obtained from step (3).

9. A method according to any preceding claim, characterised in that in step (2)(a) apical growth is suppressed and the formation of a plurality of crowns promoted or in step 2(b) production of runners is stimulated, by applying a 2-chloroethyl trimethylammonium salt or a giberellin, respectively, to the plant via its growing roots.

10. A method according to any one of Claims 1 to 8, characterised in that in step 2(a) apical growth is suppressed and the formation of a plurality of crowns promoted by removing the apical bud.

11. A method producing strawberry fruits characterised by growing crowned plants by a method claimed in any one of Claims 1 to 10, re-planting the plants directly or after cold-storage into a cultivation bed, cultivating the plants to fruiting and harvesting the fruits.

12. A method of raising runners of strawberry plants characterised by growing runner-bearing plants by a method claimed in any one of Claims 1 to 9, re-planting the plants directly or after cold-storage into a cultivation bed cultivating the plants to produce elongated, harvestable runners and harvesting the runners.

89B